# EUROPEAN PATENT APPLICATION

(11) **EP 1 346 808 A1**
(43) Date of publication of application: **24.09.2003**
(21) Application number: 03003207.2
(22) Date of filing: 20.02.2003
(51) Int. Cl.: B29C 45/16

(54) **Sandwich injection molding with breakthrough of the core component and hotrunner co-injection nozzle**

(30) Priority: 20.03.2002 IT MI20020593
(71) Applicant: Scarabelli, Dionisio, 24060 Cividino di Castelli Calepio (Bergamo) (IT); Scarabelli, Enrico, 24060 Telgate (Bergamo) (IT); Scarabelli, Marino, 24060 Telgate (Bergamo) (IT)
(72) Inventor: Scarabelli, Dionisio, 24060 Cividino di Castelli Calepio (Bergamo) (IT); Scarabelli, Enrico, 24060 Telgate (Bergamo) (IT); Scarabelli, Marino, 24060 Telgate (Bergamo) (IT)
(74) Representative: Modiano, Guido, Dr.-Ing.

(57) **Abstract**

A method for the injection-molding of products made of at least two different materials (10,11), consisting, in a first step, in injecting into a mold (2) a first material (10) in an amount that corresponds to the lining of only a surface portion of the mold (2) and, in a second step, in injecting at least one second material (11) in order to lay at the inner portion of the mold (2) lined by the first material and the remaining surface portion of the mold (2).
An injection device (40) for carrying out the method.
A product (12) made of two different materials (10,11) obtained with the method.

## Description

The present invention relates to a method and device for injection-molding products made of at least two different materials.

As is known, products are already commercially available which are obtained by injection-molding two different materials in the fluid state; in practice, the products are manufactured so as to have an outer layer, made of a first material, and an inner part or core, which is normally made of a filler or waste material and in practice is not externally visible, since it is covered completely by the first material.

In practice, therefore, products obtained by using two different materials are currently made in such a manner that a single material is visible externally.

Products made of plastics are also commercially available which have, on their surface, shades of color constituted for example by an adjacent arrangement of various colors or by a variation of tones of a same color, which currently can be obtained only by applying a coat of paint to the plastic body, thus leading to a product that requires two successive processes, with the consequent associated costs.

The aim of the invention is to provide a product in which it is possible to use two different materials so as to have both materials visible on the outer surface of the product.

Within this aim, an object of the invention is to provide a method that allows to obtain products made of two different materials, according to a succession of automatic operating steps that leads, at the end of the injection step, to the provision of a finished product.

Another object of the present invention is to provide a method that is particularly versatile and allows to provide any pairing deemed appropriate of two different materials.

Another object of the present invention is to provide an injection head that is particularly simple from the structural standpoint yet offers the possibility to manage the automatic succession of the injection of two different materials.

Another object of the present invention is to provide a method which, by virtue of its particular constructive characteristics, is capable of giving the greatest assurances of reliability and safety in use and is further particularly advantageous from a merely economical standpoint.

This aim and these and other objects that will become better apparent hereinafter are achieved by a method for the injection-molding of products made of at least two different materials, according to the invention, characterized in that it consists, in a first step, in injecting into a mold a first material in an amount that corresponds to the lining of only a surface portion of said mold and, in a second step, in injecting at least one second material so as to lay at the inner portion of the mold lined by said first material and the remaining surface portion of said mold.

The invention also regards an injection device as set forth in the claims.

Further characteristics and advantages of the invention will become better apparent from the following detailed description of a preferred but not exclusive embodiment thereof, illustrated only by way of non-limitative example in the accompanying drawings, wherein:
Figure 1 is a schematic view illustrating the first step of the method, with the injection of the first material;
Figure 2 is a schematic view illustrating the initial part of the second step, with the injection of the second material inside the first material;
Figure 3 is a schematic view illustrating the final part of the second step, with the overflow of the second material with respect to the first material;
Figure 4 is a view illustrating the final step, with the injection of the final quantity of first material;
Figure 5 is a schematic view of a product obtained with the method according to the invention;
Figure 6 is a sectional view of an injector during the first step;
Figure 7 is a sectional view of an injector during the second step;
Figure 8 is a sectional view of an injector during the third step;
Figure 9 is a view of the injector in the closure position.

With reference to the figures, the method for injection-molding products made of at least two different materials according to the invention consists, in a first step, in injecting into a cavity 1 of a mold, generally designated by the reference numeral 2, a first material, preferably constituted by a thermoplastic material, which is generally designated by the reference numeral 10.

A first important particularity of the invention consists in that the quantity of first material that is introduced, during the first step of operation, is such as to line only a surface portion of the surfaces of the cavity 1 of the mold 2.

In this manner, when the injected plastic material makes contact with the surface of the mold cavity, it forms outer surface layers which set.

Once the first step for the injection of the preset quantity of material has ended, a second step is performed in which a second thermoplastic material 11 is injected, such second material being chemically compatible with the first material 10 and having, for example, a different coloring or a different color shade or tonality.

During the step for the injection of the second material, said second material, as shown in Figure 2, initially arranges itself in or lays at the inner portion of the part of mold cavity that has been lined by the first material.

As the injection of the second material continues, in practice said material overflows, i.e., it flows out of the region affected or occupied by the first material and in practice completes the filling of the mold, forming a color shading and in any case a product in which both materials are visible on the outer surface.

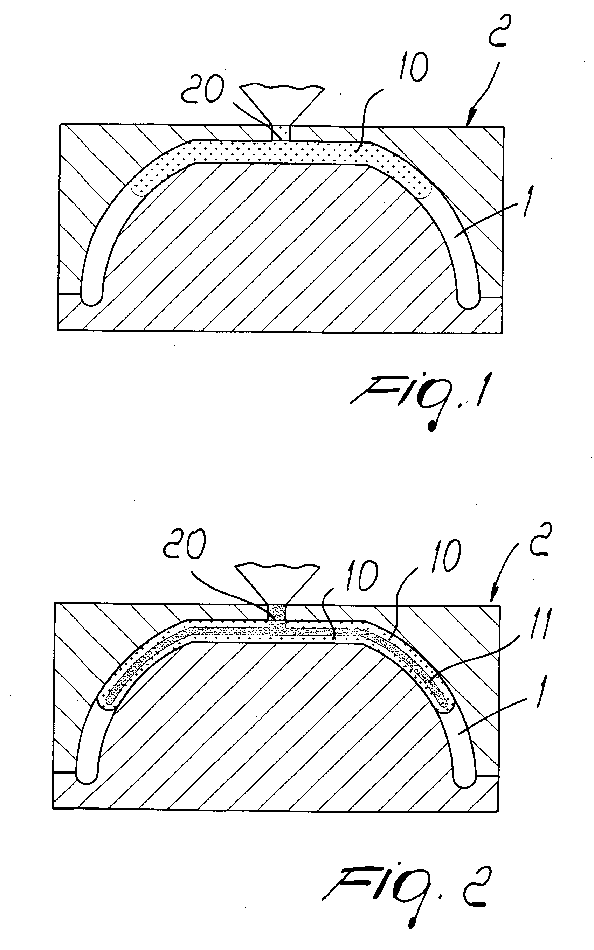

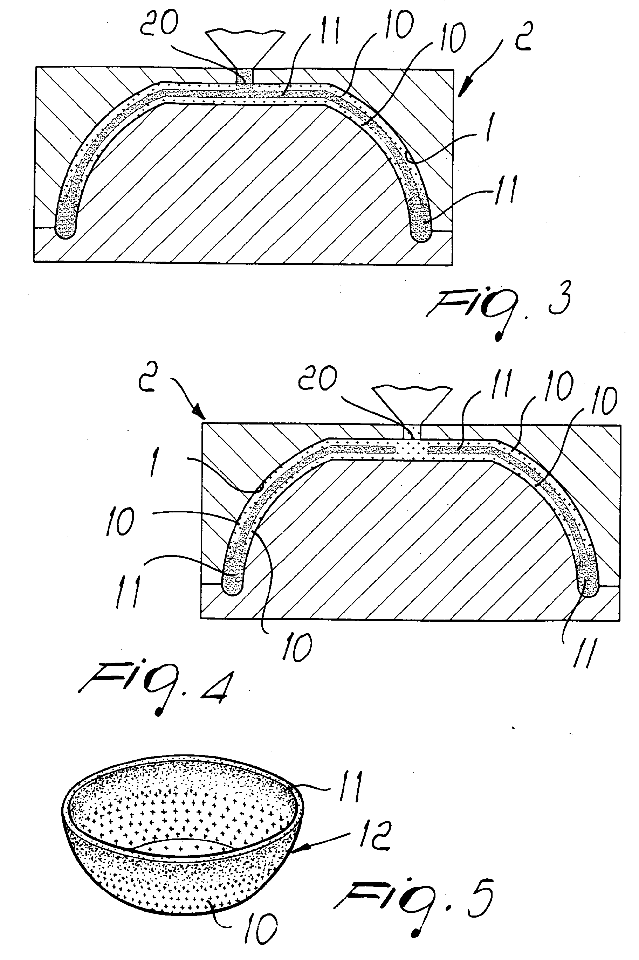

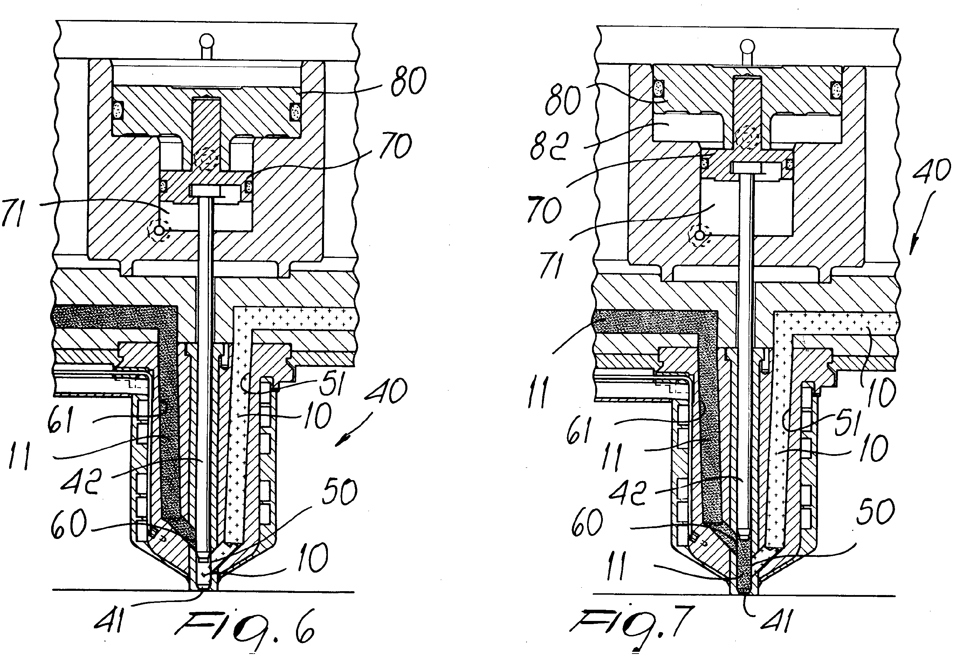

The specific example shown in Figures 1 to 5 illustrates a product in the form of a bowl 12, in which the second material affects or lays over, for example, the free edge, which has a different coloring and blends with a band or strip in which a gradual color variation is achieved in order to pass from the coloring of the first material to the coloring of the second material.

Clearly, the variation in the type of color shading can be obtained by varying the quantities of material, by varying the injection pressures or by varying the corresponding temperatures.

To complete the method, there is a third step in which an additional injection of the first material is performed which in practice affects or extends over in the region 20 where the nozzle is arranged.

The additional injection of the first material, besides providing surface completion with the first material at the injection region, in practice is designed to "clean" the nozzle region, so that the second material is eliminated and the nozzle is already ready for a subsequent injection step.

With reference to Figures 6 to 9, an injector is provided which is generally designated by the reference numeral 40 and has a body with a nozzle 41 that can be arranged at the mold and is controlled by a closure stem 42, which can move in order to selectively assume three different operating positions: in particular, it can assume a first position, shown in Figure 6, in which it frees the first port 50 of the first duct 51 for injecting the first material.

In this step, the first step of the method is performed; at the end of said step, the stem is made to perform a translational motion so as to free the second port 60 of a second duct 61 for introducing the second material.

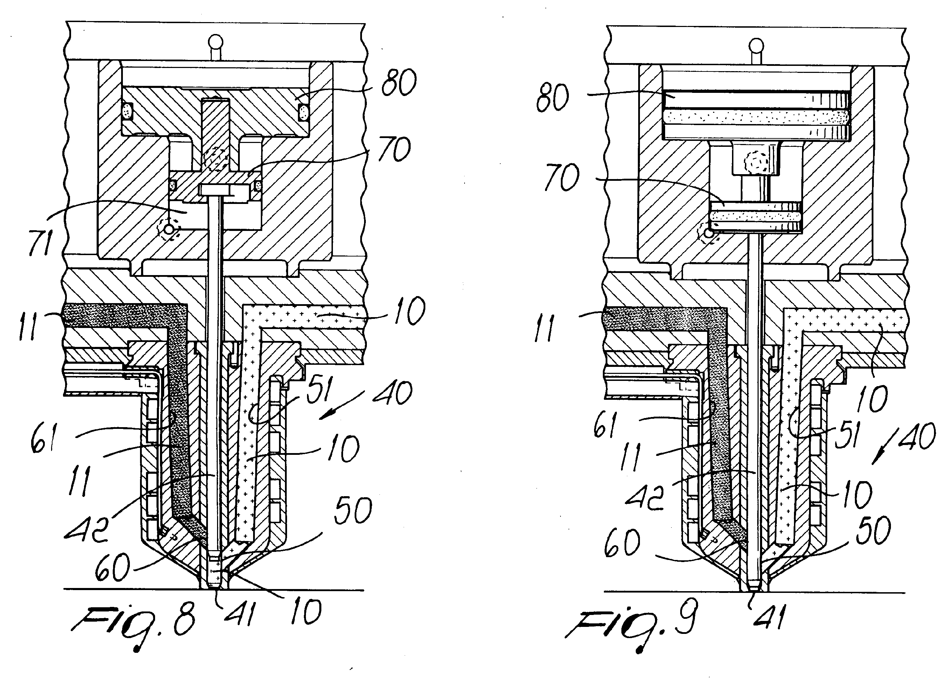

It is noted that in the step of introducing the second material (Figure 7), a counterpressure is maintained in the first duct 51 in order to prevent the return of the second material into the first channel.

Once the operating step has ended, the stem 42 is made to perform a translational motion (Figure 8) and is arranged so as to connect only the first channel 51, which performs the third step of the process, with injection of the final portion of the first material.

In order to produce the translational motion of the stem 42, there is a first piston 70, which is connected to the stem and moves in a first chamber 71.

A second piston 80 engages the first piston 70 by contact and can move in a second chamber 82, which has a larger diameter than the first chamber 71, so that the translational motion of the second piston 80 is limited to the step for the passage of the stem from the position in which it leaves free the second port 60 to the position in which it leaves free only the first port 50.

The actuation of the first piston, during the descent step, closes the first port and in practice closes the injector.

In greater detail, the second piston acts as a stroke limiter for the first piston for the transfer from the closure position to the position in which the stem leaves free the first port, while the subsequent ascent step is performed thanks to the possibility to produce the simultaneous translational motion of the first and second pistons.

From what has been described above it is evident that the invention achieves the intended aim and objects, and in particular the fact is stressed that a method is provided which allows to obtain articles that have a surface provided with color shades, in which the shading is provided by the presence of two different materials.

Furthermore, the particular structure of the injector that is used allows to obtain in a simple manner the automatic succession of the various steps of operation.

The invention thus conceived is susceptible of numerous modifications and variations, all of which are within the scope of the appended claims.

All the details may further be replaced with technically equivalent elements.

In practice, the materials used, so long as they are compatible with the specific use, as well as the contingent shapes and dimensions, may be any according to requirements.

The disclosures in Italian Patent Application No. MI2002A000593 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the injection-molding of products made of at least two different materials, **characterized in that** it consists, in a first step, in injecting into a mold (2) a first material (10) in an amount that corresponds to the lining of only a surface portion of said mold (21) and, in a second step, in injecting at least one second material (11) so as to lay at the inner portion of the mold (2) lined by said first material (10) and the remaining surface portion of said mold.

2. The method according to claim 1, **characterized in that** it comprises a third final step for introducing said first material (10) in order to complete the outer surface portion with said first material (10).

3. The method according to the preceding claims, **characterized in that** during said second step of injection of said second material (11), a counterpressure is maintained in a first duct (51) for the injection of said first material (10), in order to prevent the return of said second material (11) into the first duct (51) for the injection of the first material (10).

4. An injection device for injecting two different thermoplastic materials, **characterized in that** it comprises a body with a nozzle (41) controlled by a closure stem (42) connected to a first piston (70), said closure stem (42) being movable in said body to selectively close and free a first port (50) of a first duct (51) of a first material (10) and a second port (60) of a second duct (61) for injecting a second material (11), a second piston (80) being further provided which limits the translational motion of said first piston (70) during injection of said first material (10).

5. The device according to one or more of the preceding claims, **characterized in that** it comprises a first chamber (71) for accommodating said first piston (70) and a second chamber (82) having a larger diameter for accommodating said second piston (80).

6. A product made of two different materials (10,11), **characterized in that** it comprises a first part, made of a first thermoplastic material (10), which lays only at a portion of the surface of the product (12), and a second part, made of a second thermoplastic material (11), which lays at the remaining surface portion of the product.
